# EUROPÄISCHE PATENTSCHRIFT

(11) **EP 0 568 005 B1**
(45) Veröffentlichungstag und Bekanntmachung des Hinweises auf die Patenterteilung: **24.07.1996**
(21) Anmeldenummer: 93106806.8
(22) Anmeldetag: 27.04.1993
(51) Int. Cl.: F16K 31/34

(54) **Tankentlüftungsventil**
Fuel tank vent valve
Soupape de purge pour un réservoir

(30) Priorität: 28.04.1992 DE 4213932
(43) Veröffentlichungstag der Anmeldung: 03.11.1993
(73) Patentinhaber: A. KAYSER GmbH & Co. KG., W-3352 Einbeck (DE)
(72) Erfinder: Moses, Erhard, W-3352 Einbeck (DE)
(74) Vertreter: Rutetzki, Andreas, Dipl.-Ing.

(56) Entgegenhaltungen:
- US-A- 2 557 536
- US-A- 3 493 007
- US-A- 4 011 884
- US-A- 4 953 583

## Beschreibung

Die Erfindung betrifft ein Tankentlüftungsventil wie es im Oberbegriff von Anspruch 1 beschrieben ist.

Ein derartiges Ventil ist aus der US-A-4 953 583 bekannt.

Tankentlüftungsventile dienen dazu, einen im Tank entstehenden Überdruck abzuführen, wobei der Tank im Regelfall, insbesondere ein Kraftstofftank von Kraftfahrzeugen, auch bei maximaler Befüllung einen Leerraum aufweist. Bei Erwärmung entsteht in diesem Leerraum ein Überdruck, wobei dieser Überdruck beispielsweise an die Atmosphäre abgeführt werden soll.

Aus der US-PS 25 57 536 ist ein Tankentlüftungsventil, insbesondere geeignet für Öltanks, bekannt. Dieses Tankentlüftungsventil dient einerseits zum Abführen eines Überdrucks aus dem Tank und andererseits zum Belüften des Tanks im Falle eines im Tank herrschenden Unterdrucks. Die Abdichtung des Tankentlüftungsventiles erfolgt über einen federbelasteten beweglich gelagerten Verschlußkörper, an welchem eine Membran angeordnet ist, die durch Anlage an einem Randbereich eines Auslaßkanals für die Abdichtung sorgt. Damit die Membran dicht genug an dem vorgenannten Randbereich anliegt, ist ein Kanal vorgesehen, durch welchen ein Überdruck aus dem Tank an die Oberseite der Membran geführt werden kann. Dazu ist zwischen der Membran und dem Verschlußkörper ein abgeschlossener Raum ausgebildet. Sobald der Druck im Tank eine bestimmte Größe erreicht, kann der Verschlußkörper gegen die Federkraft nach oben bewegt werden und nimmt dabei die Membran mit und zwar so weit, bis sich die Membran von dem vorbezeichneten Randbereich wegbewegt hat. In dieser Stellung kann der Überdruck aus dem Tank abgeführt werden. Die Membran ist in ihrem äußeren Bereich zwischen dem Abschluß des Randbereiches und dem Verschlußkörper so dimensioniert, daß sie sich nach unten oder oben durchbiegen kann. In der Verschlußstellung des Ventils ergibt sich durch den auf der Oberseite der Membran anstehenden Überdruck aus dem Tank ein Durchbiegen der Membran nach unten. Bildet sich im Tank ein Unterdruck aus, kann durch die Austrittsöffnung des Ventils der Atmosphärendruck an die Unterseite der Membran gelangen und diese nach oben durchbiegen und zwar so weit, daß die Membran von dem Randbereich wegbewegt wird, ohne daß dabei der Verschlußkörper gegen die Federkraft nach oben bewegt wird. In dieser Öffnungsstellung kann Druck zum Druckausgleich in das Tankinnere gelangen und der dort herrschende Unterdruck abgebaut werden.

Die US-PS 4 953 583 offenbart ein Tankentlüftungsventil, bei welchem die Verbindung zwischen dem Einlaß und dem Auslaß durch ein Verschlußelement unterbrochen wird. Das Verschlußelement weist eine Durchgangsbohrung auf, deren Eingang durch einen im Gehäuse angeordneten Schwimmer z.B. bei einer Schräglage des Tankentlüftungsventils verschlossen wird. Bei Überdruck in dem Tankinneren gibt das Verschlußelement die Verbindung zwischen Einlaß und Auslaß frei und Gas strömt von dem Tankinneren durch das Gehäuse zu dem Auslaß. Der Schwimmer kann durch die Gasströmung im Gehäuse mitgerissen bzw. angehoben werden und eventuell die Durchgangsbohrung des Verschlußelementes verschliessen, wodurch nachteilhaft verursacht wird, daß das Verschlußelement die Gasströmung unterbricht.

Es ist daher Aufgabe der vorliegenden Erfindung ein Tankentlüftungsventil bereitzustellen, welches in zuverlässiger Weise den in einem Tank entstehenden Überdruck abführen kann und insbesondere eine ungewollte Unterbrechung der Gasströmung verhindert.

Diese Aufgabe wird erfindungsgemäß durch ein Tankentlüftungsventil mit den Merkmalen des Anspruchs 1 gelöst.

Bevorzugte Ausführungsformen der vorliegenden Erfindung sind Gegenstand der Unteransprüche.

Durch vorsehen einer Leiteinrichtung wird der Gasstrom vorteilhafterweise am Schwimmer vorbeilenkt, wodurch der Schwimmer vom Gasstrom weitgehend freigehalten wird. Die Leiteinrichtung sorgt vorteilhaft dafür, daß sich an einem Ende des Schwimmers keine derartigen Druckverhältnisse einstellen, welche beim Austreten des Gasstroms zum Auslaß der Tankentlüftung hin den Schwimmer mitnehmen. Es kann somit eine Bewegung des Schwimmers zum Verschleßelement bei aus dem Tank austretenden Gas verhindert werden. Es ist somit vorteilhaft gewährleistet, daß eine Bewegung des Schwimmers nur dann in Richtung des Verschlußelementes stattfindet, wenn diese durch Flüssigkeit aus dem Tank verursacht wird, insbesondere wenn sich Flüssigkeit aus dem Tank im Inneren des Tankentlüftungsventils befindet.

Mit Vorteil erfolgt das Verschließen bzw. Absperren der Eintrittsöffnung des Durchgangskanals über die Anlage des im Gehäuse angeordneten Schwimmers. Das Verschließen der Eintrittsöffnung könnte zwar prinzipiell auch über andere Einrichtungen erfolgen. Da ein Verschließen aber vorzugsweise gewünscht ist, um ein Eindringen des Tankinhalts in das Tankentlüftungsventil zu verhindern, ist der Einsatz eines Schwimmers von Vorteil, wobei für diesen Fall der der Eintrittsöffnung zugewandte Bereich des Schwimmers so mit der Konfiguration des freien Endes der Eintrittsöffnung abgestimmt ist, daß es bei einer Anlage des Schwimmers am Einlaßkanal zu einer ausreichenden Abdichtung kommt. Die Abdichtung muß dabei nicht zwangsweise gasdicht erfolgen. Es kann genügen, wenn die Abdichtung das Eindringen des Tankinhaltes in die Eintrittsöffnung zuverlässig verhindert.

Mit dem vorgeschlagenen Tankentlüftungsventil ist es möglich, erst bei einem vorbestimmbaren, im Inneren des Tanks herrschenden Druck die Abführung des sich im Tank ansammelnden Gases, also die Abführung des Überdrucks, vorzunehmen. Dazu ist unter anderem ein Verschlußelement vorgesehen, welches sich bis zu einem vorbestimmbaren Druck in einer Verschlußstellung befindet und erst bei, den vorbestimmbaren Druck übersteigenden Druckverhältnissen in eine Öffnungsstellung bewegt wird. In der Öffnungsstellung kann dann der Überdruck, d.h. das sich im Tank ansammelnde Gas, durch den Einlaß in das Innere des Tankentlüftungsventil geführt und an dem Verschlußelement vorbei zum Auslaß des Tankentlüftungsventils geleitet werden. Von dort kann das Gas dann beispielsweise vorzugsweise nach entsprechender Filterung an die Atmosphäre abgeführt oder anderen Einrichtungen zugeführt werden. Das Verschlußelement wird bei einer Lageänderung von der Verschlußstellung in die Öffnungsstellung beim Öffnen dabei gegen die Strömungsrichtung des Gases bewegt. Unter bestimmten Umständen und mittels bestimmter Einrichtungen kann deshalb auch bei, den vorbestimmbaren Druck übersteigenden Druckverhältnissen dafür gesorgt werden, daß sich das Verschlußelement entgegen der eigentlichen Forderung nicht in die Öffnungstellung bewegt. Dies kann beispielsweise dann der Fall sein, wenn bei einer bestimmten Schräglage des Tanks dafür gesorgt werden soll, daß trotz einem größeren als dem vorbestimmbaren Druck das Tankentlüftungsventil geschlossen bleibt, um ein Austreten des Tankinhaltes aus dem Tankentlüftungsventil zu verhindern. Im Inneren des Verschlußelement ist ein Durchgangskanal angeordnet, dessen Austrittsöffnung in einen Raum führt, der ansonsten nach außen sowie zur Innenseite des Gehäuses hin abgedichtet ist. Durch diese Ausbildung des Verschlußelements kann der sich im Tank ansammelnde Druck nicht nur auf einer Seite des Verschlußelements, also beispielsweise dessen Unterseite, sondern an zwei Seiten des Verschlußelements, nämlich beispielsweise der Ober- und der Unterseite des Verschlußelementes, wirken. Insbesondere kann der Druck auch in dem Raum wirken, in welchen die Austrittsöffnung des Durchgangkanals des Verschlußelementes führt. Dazu ist dieser Raum zur Innenseite des Gehäuses hin abgedichtet. Die Abdichtung besteht dabei aus einem flexiblen bzw. elastischen und somit nicht starren also Bewegungen zulassenden Element, insbesondere in Form einer Membran, welche vorzugsweise einerseits am Verschlußelement und vorzugsweise andererseits an der Innenseite des Gehäuses angeordnet ist. Das elastische Element bzw. die Membran bildet somit zusammen mit dem Verschlußelement und dem entsprechenden Bereich der Innenseite des Gehäuses den erwähnten Raum, in welchem sich der Überdruck bzw. Gasdruck ausbilden kann. Die Resultierende des auf der Membran und dem Verschlußelement anstehenden Drucks wirkt dann beispielsweise gegen die sich aus einem elastischen bzw. federnden Teil auf das Verschlußelement wirkenden Kraft. Sobald die Resultierende einen vorbestimmbarem Betrag überschritten hat, der größer ist als die Kraftkomponente aus dem elastischen bzw. federnden Teil, wird das Verschlußelement aus seiner Verschlußstellung in die Öffnungsstellung bewegt, wodurch der Überdruck bzw. Gasdruck aus dem Tank abgeführt werden kann.

Vorzugsweise ist der Auslaß oberhalb des Tankes und somit außerhalb diesem und der Einlaß innerhalb des Tankes angeordnet. Dazu wird das Tankentlüftungsventil so an der Oberseite des Tankes angeordnet, daß ein Teil des Gehäuses, nämlich dessen unterer Bereich, in den Tank hineinragt, während der übrige Teil des Gehäuses außerhalb des Tankes angeordnet ist. Die Anschlußstelle zwischen dem Tank und dem Tankentlüftungsventil wird beispielsweise über eine Gummidichtung abgedichtet. Um die Dichtheit an dieser Verbindungsstelle zu erhöhen, kann das Tankentlüftungsventil auch mit dem Tank verschweißt werden.

Vorzugsweise ist der Auslaß des Tankentlüftungsventils mit einer Einrichtung verbunden, die ein Austreten von ungefiltertem Gas in die Atmosphäre verhindert. Mit dieser Einrichtung soll vermieden werden, daß eventuell giftige Gase eines Tanks direkt in die Atmosphäre gelangen.

Die betreffende Einrichtung besteht vorzugsweise aus einem Filter für das Gas und/oder einer Rückführeinrichtung zu den Verbrennungsräumen der entsprechenden Verbrennungsmaschine. Das Filter sorgt für eine Reinigung des Gases, so daß lediglich gefiltertes, von Schadstoffen freigehaltenes Gas in die Atmosphäre austreten kann. Zusätzlich oder auch alternativ kann der Auslaß mit einer Rückführeinrichtung versehen sein, die das Gas dann in die Verbrennungsräume der entsprechenden Verbrennungsmaschine zurückführt, so daß weder ungefiltertes noch gefiltertes Gas in die Atmosphäre austritt.

Das Verschlußelement ist zweckmäßigerweise über ein elastisches, vorzugsweise federndes Teil in seiner Verschlußstellung gehalten. Das elastische oder auch federnde Teil sorgt zwar für die Verschlußstellung des Verschlußelementes bis zu einem vorbestimmbaren Druck. Bei einem größeren als dem vorbestimmbaren Druck kann jedoch das elastische oder federnde Teil verformt werden und eine Bewegung des Verschlußelementes in eine Öffnungsstellung zulassen. Dabei kann es auf einfache Weise durch entsprechende Materialbestimmung des elastischen oder federnden Teils sichergestellt werden, daß ab einem ganz bestimmten Druck eine Bewegung des Verschlußelementes aus der Verschlußstellung erfolgt.

Vorzugsweise besteht das elastische Teil aus einer, in Strömungsrichtung des Gases gesehen, unterhalb des Verschlußelementes angeordneten Feder bzw. Druckfeder. Die Federkraft sorgt bei einem kleineren als dem vorbestimmbaren Druck dafür, daß das Verschlußelement stets in der Verschlußstellung gehalten wird, in welcher kein Gas aus dem Tank zum Auslaß des Tankentlüftungsventils gelangen kann. Sobald der vorbestimmbare Druck überschritten wird, drückt das Verschlußelement die Feder gegen deren Federkraft zusammen und gibt somit eine Verbindung zwischen dem Tankinneren und dem Auslaß des Tankentlüftungsventils frei.

Dazu ist es zweckmäßig, wenn der Gasdruck mittelbar oder unmittelbar auf das Verschlußelement wirkt, um bei dem vorbestimmbaren Gasdruck das Verschlußelement gegen die Kraft des elastischen oder federnden Teils in die Öffnungsstellung zu bewegen. Die letztlich auf das Verschlußelement aufgrund des herrschenden Gasdrucks wirkende Kraftkomponente bestimmt dann die Lage des Verschlußelementes.

Mit Vorteil strömt das Gas in Öffnungsstellung des Verschlußelementes an dessen Außenseite vorbei. Das Verschlußelement gibt in seiner Öffnungsstellung einen bestimmten Querschnitt frei, in dem es sich von seiner dichtenden Anlage im Inneren des Gehäuses wegbewegt. Der Gasstrom kann dann durch diesen Bereich an der Außenseite des Verschlußelementes entlang zum Auslaß des Tankventils hineinströmen. Durch eine entsprechende Konfiguration und Dimensionierung des Austrittquerschnitts in der Öffnungsstellung des Verschlußelementes kann es erreicht werden, daß innerhalb einer kurzen Zeitspanne ein großes Volumen aus dem Tank zum Auslaß des Tankentlüftungsventils abgeführt wird.

Die Maßnahme, wonach das Verschlußelement neben der Wirkung des elastischen bzw. federnden Teils über einen im Gehäuse angeordneten Schwimmer in die Verschlußstellung gebracht und/oder in der Verschlußstellung gehalten wird ist insbesondere dann zweckmäßig, wenn beispielsweise bei einer Schräglage des Tankes verhindert werden soll, daß der Tankinhalt zum Auslaß des Tankentlüftungsventils gelangt. Um dies zu verhindern, muß sich das Verschlußelement in der Verschlußstellung befinden. Dies ist aber beispielsweise dann nicht der Fall, wenn die herrschenden Druckverhältnisse das Verschlußelement in die Öffnungsstellung bewegt haben, d.h. die Kraft der Druckfeder nicht ausreicht, das Verschlußelement in der Veschlußstellung zu halten. Wird dann zusätzlich zu der Federkraft der Druckfeder eine in gleicher Richtung auf das Verschlußelement wirkende Kraft ausgeübt, kann das Verschlußelement trotz eines größeren als dem vorbestimmten Druck in die Verschlußstellung gebracht werden. Entsprechendes gilt dann, wenn sich das Verschlußelement zwar in Verschlußstellung befindet, die Druckverhältnisse aber in kurzer Zeit eine Öffnung des Verschlußelementes bewirken würden. Die Verwendung eines Schwimmers zum zusätzlichen Bewegen des Verschlußelementes in die Verschlußstellung bzw. zum zusätzlichen Halten in der Verschlußstellung ist praktikabel, weil ein dauerhaftes, von den Druckverhältnissen unabhängiges Halten des Verschlußelementes in der Verschlußstellung eigentlich nur dann erforderlich ist, wenn sich im Inneren des Tankentlüftungsventils Flüssigkeit aus dem Tank befindet, deren Austritt aus dem Tankentlüftungsventil durch den Einsatz des Schwimmers letztlich verhindert werden soll.

Zweckmäßigerweise ist die Eintrittsöffnung des Durchgangskanals des Verschlußelementes verschließbar. Es kann unter bestimmten Umständen gewünscht sein, daß weder ein zu großer Überdruck in den Durchgangskanal des Verschlußelementes und somit den sich daran anschließenden Raum, noch eventuell der Tankinhalt in diesen Bereich gelangt. Dies kann dann verhindert werden, wenn der Durchgangskanal verschlossen bzw. abgesperrt werden kann.

Mit besonderem Vorteil ist eine weitere Verbindung bei dem Tankentlüftungsventil vorgesehen, die ein permanentes Entlüften des Tanks zum Auslaß hin ermöglicht. Die weitere Verbindung sorgt dabei grundsätzlich für eine Vorentlüftung des Tanks.

Zweckmäßigerweise ist die weitere Verbindung, in Strömungsrichtung des Gases gesehen, hinter der Verschlußstelle der Einlaßöffnung angeordnet. Diese Anordnung der weiteren Verbindung ist dann besonders zweckmäßig, wenn ein Auslaufen des Tankinhaltes aus dem Tankentlüftungsventil sicher vermieden werden soll. Die weitere Verbindung muß sich dann an einer Stelle befinden, deren Zugang bei Eindringen des Tankinhaltes in das Innere des Tankentlüftungsventils zuverlässig und dauerhaft versperrt werden kann, zumindest solange, wie sich eine bestimmte Menge der Flüssigkeit des Tankes im Tankentlüftungsventil befindet. Da bei Eindringen von Flüssigkeit in das Innere des Tankentlüftungsventils der Schwimmer angehoben wird und dabei gegen die Eintrittsöffnung des Durchgangskanals drückt und diesen abdichtet, kann die weitere Verbindung, in Strömungsrichtung des Gases gesehen, an einer beliebigen Stelle hinter der Verschlußstelle zwischen dem Schwimmer und dem Verschlußelement angeordnet sein, ohne daß dabei die Gefahr besteht, daß die Flüssigkeit des Tankes über die weitere Verbindung zum Auslaß des Tankentlüftungsventils gelangt. Ein weiterer Vorteil der bevorzugten Anordnung der weiteren Verbindung besteht in der dadurch möglichen Entspannung eines eventuell im Durchgangskanal bzw. dem oberhalb der Austrittsöffnung des Durchgangskanals befindlichen Überdrucks bzw. Gasdrucks. Sollte im Zeitpunkt der dichtenden Anlage des Schwimmers an der Eintrittsöffnung des Durchgangskanals ein Überdruck im Durchlaßkanal bzw. dem danach angeordneten Raum vorherrschen, könnte dieser Überdruck erhalten bleiben. Wenn aber durch diese Überdruckverhältnisse das Verschlußelement in die Öffnungsstellung bewegt worden ist, könnte dieser Überdruck durch die dichtende Anlage des Schwimmers nicht mehr abgebaut werden, weshalb letztlich die Gefahr bestehen könnte, daß die Kraftkomponente aus dem Auftrieb des Schwimmers nicht ausreicht, das Verschlußelement wieder zurück in die Verschlußstellung zu dringen. In diesem besonderen Fall könnte dann trotzdem Flüssigkeit aus dem Tankentlüftungsventil austreten, was durch die weitere Verbindung aber sicher verhindert werden kann.

Eine bevorzugte Stelle für die Anordnung der weiteren Verbindung besteht am Durchlaßkanal des Verschlußelements. Dazu kann beispielsweise eine Bohrung in der Wandung des Verschlußelementes vorgesehen sein, die eine Verbindung von der Außenseite des Verschlußelements zum Durchlaßkanal herstellt. Zweckmäßigerweise wird eine solche Bohrung so ausgerichtet sein, daß deren Auslaßstelle zum Auslaß des Tankentlüftungsventils weist. Die weitere Verbindung könnte aber auch beispielsweise in der Membran oder im weitesten Sinne in dem oberhalb des Verschlußelements liegenden Raum ausgebildet sein. So wäre es denkbar, die weitere Verbindung auch im oberen Gehäuseabschluß des Tankentlüftungsventils auszubilden. Um dabei allerdings zu vermeiden, daß eine Entlüftung direkt in die Atmosphäre stattfindet, müßte an der Austrittsstelle der weiteren Verbindung eine Leitung angeordnet sein, die letztlich wieder zum Auslaß des Tankentlüftungsventils zurückgeführt wird.

Weiterhin ist es zweckmäßig, wenn in der Nähe der Verschlußstelle zwischen dem Verschlußelement und dem Schwimmer wenigstens eine zusätzliche Öffnung in dem Gehäuse angeordnet ist, die mit dem Tankinneren in Verbindung steht. Dabei ist es von Vorteil, wenn diese zusätzliche Öffnung zumindest auf dem gleichen Höhenniveau mit der Verschlußstelle angeordnet ist. Diese zusätzliche Öffnung soll eine Behinderung der Aufwärtsbewegung des Schwimmers vermeiden, indem der sich oberhalb des Schwimmers befindliche Raum zum Tankinneren hin entlüftet werden kann, der Schwimmer also nicht etwa ein oberhalb diesem ausgebildetes Gaspolster zunächst komprimieren muß, um überhaupt in Anlage mit der Eintrittsöffnung des Verschlußelementes zu gelangen. Mit anderen Worten soll oberhalb des Schwimmers bei dessen Bewegung zum Verschlußelement hin kein abgeschlossener Raum ausgebildet werden, dessen Gasinhalt zunächst komprimiert werden muß, bevor der Schwimmer in Anlage mit dem Verschlußelement gelangt.

Anhand einer bevorzugten Ausfuhrungsform wird das erfindungsgemäße Tankentlüftungsventil nachfolgend noch näher beschrieben. Es zeigen dabei:
- Fig. 1: eine Ansicht eines erfindungsgemäßen Tankentlüftungsventils
- Fig. 2: einen Querschnitt durch das Tankentlüftungsventil gemäß Fig. 1.

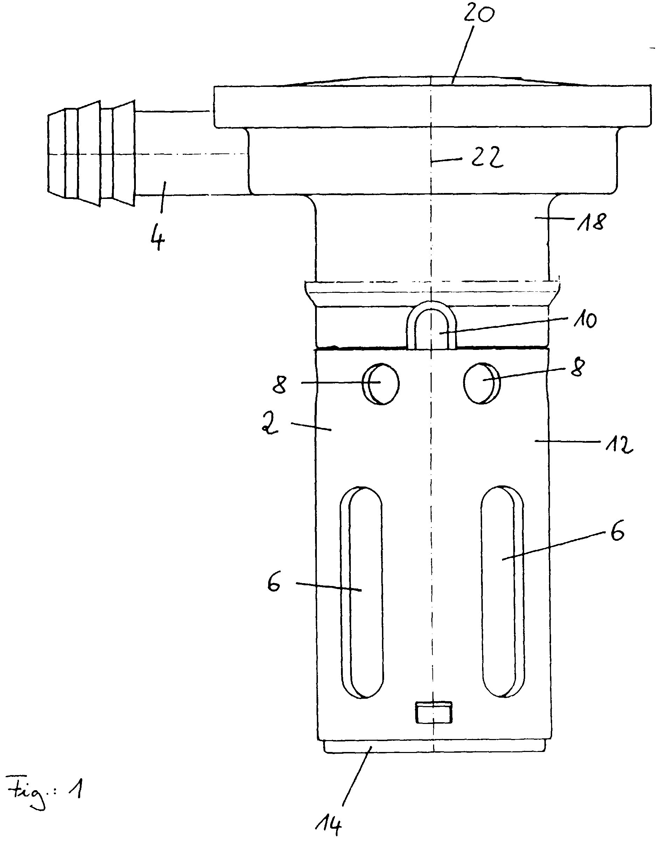

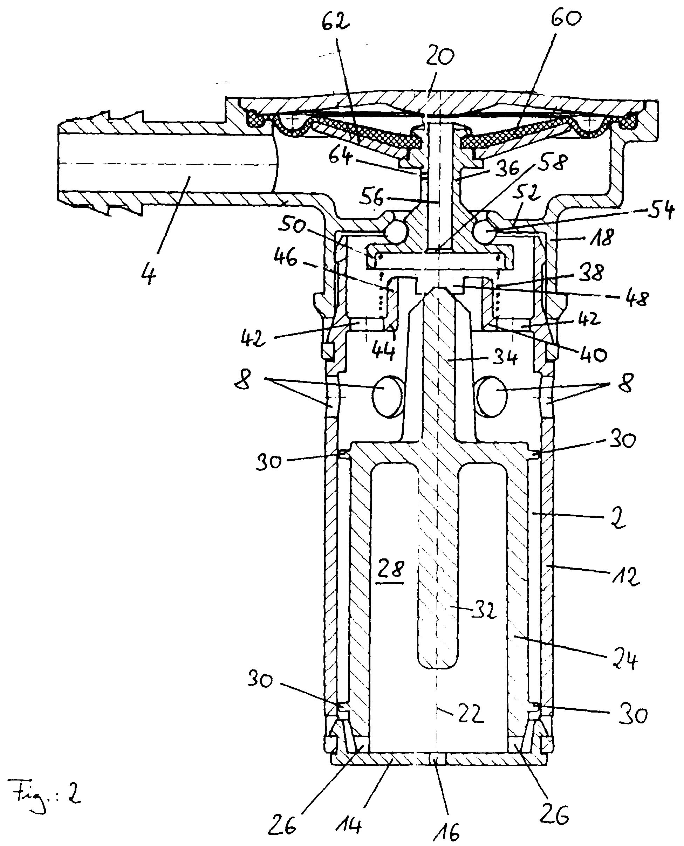

Das in den Figuren 1 und 2 gezeigte Tankentlüftungsventil besteht aus einem Gehäuse 2, wobei im oberen Bereich des Gehäuses 2 ein Auslaß in Form eines Stutzens 4 angeformt ist. Das Tankentlüftungsventil wird in einen nicht gezeigten Tank eingebaut, wobei der Stutzen 4 außerhalb des Tanks angeordnet ist, während der unterhalb des Stutzens 4 angeordnete Bereich des Gehäuses 2 in den Leerraum des Tanks hineingreift, also innerhalb des Tankes angeordnet ist. Im Gehäuse 2 sind in dem, in den Tank ragenden Bereich mehrere Einlässe ausgebildet. Im unteren Bereich des Gehäuses 2 bestehen die Einlässe aus, in Richtung der Längsachse 22 des Gehäuses 2 gesehen, länglichen Ausnehmungen 6. Oberhalb dieser Ausnehmungen 6 sind weiterhin kreisrunde Öffnungen 8 als zusätzliche Einlässe im Gehäuse 2 ausgebildet. Vorzugsweise sind, symmetrisch verteilt, jeweils vier Ausnehmungen 6 und vier Öffnungen 8 vorgesehen. Oberhalb der Öffnungen 8 sind zwei, gegenüberliegend am Gehäuse 6 ausgebildete zusätzliche Öffnungen 10 vorgesehen. Die zusätzlichen Öffnungen 10 befinden sich nach dem Einbau des Tankentlüftungsventils noch im Leerraum des Tanks. Auf die Ausnehmungen 6 sowie die Öffnungen 8 und 10 wird spater noch näher eingegangen.

Aus Figur 2 sind die innerhalb des Gehäuses 2 vorgesehenen Einrichtungen sowie der innere Aufbau des Tankentlüftungsventils ersichtlich. Das Gehäuse 2 ist aus einzelnen Teilen zusammengesetzt wobei die im Tankinneren befindlichen Einzelteile des Tankentlüftungsventils zusammensteckbar ausgebildet sind, da in diesem Bereich des Tankentlüftungsventils das Gehäuse 2 weder flüssigkeits- noch gasdicht ausgebildet sein muß. Auf den, die Ausnehmungen 6 sowie die Öffnungen 8, 10 aufweisenden Gehäusehauptkörper 12, der auch als Schwimmergehäuse bezeichnet werden kann, ist an dessen unterem freien Ende ein Gehäuseboden 14 aufgeclipst. Dazu weist der Gehäusehauptkörper 12 an dessen unterem freien Ende Ausnehmungen auf, in welche Einrastnasen des Gehäusebodens 14 einrasten können. Der Gehäuseboden 14 weist, vorzugsweise mittig angeordnet, eine Öffnung 16 auf, die sicherstellt, daß im Gehäuse 2 befindlicher Tankinhalt vollständig aus dem Tankentlüftungsventil austreten und in den Tank zurückfließen kann. Auch bei maximal gefülltem Tank ist das Zurückfließen gesichert, da sich der Gehäuseboden 14 im Leerraum des Tanks, also oberhalb des höchsten Niveaus des Tanksinhaltes befindet. Das obere freie Ende des Gehäusehauptkörpers 12 weist ebenfalls Einrastnasen auf, die in entsprechende Ausnehmungen eines Gehäuseabschlußkörpers 18 rastend eingreifen. Das untere freie Ende des Gehäuseabschlußkörpers 18 ragt noch in den Tank hinein, so daß dessen Ausnehmungen ebenfalls im Inneren des Tanks angeordnet sind. Der Gehäuseabschlußkörper geht einstückig in den Auslaßstutzen 4 über, an dessen freiem Ende eine nicht gezeigte Leitung angeordnet sein kann, die beispielsweise zu einem Aktivkohlefilter führt. Der obere Abschluß des Gehäuseabschlußkörpers 18 wird von einem Deckel 20 gebildet, der in den Gehäuseabschlußkörper 18 eingesetzt und dort verschweißt ist. Die Verbindung zwischen dem Deckel 20 und dem Gehäuseabschlußkörper 18 muß flüssigkeits- sowie gasdicht ausgebildet sein, damit insbesondere keine Gase in die Atmosphäre austreten können. Die einzelnen Teile des Gehäuses 2 sind vorzugsweise aus Kunststoff ausgebildet. Der untere, in den Tank hineinragende Teil des Gehäuses 2 ist vorzugsweise kreiszylinderförmig ausgebildet. Der Gehäuseabschlußkörper 18 ist vorzugsweise ebenfalls, abgesehen von dem Stutzen 4, in seinem, zu Längsachse 22 des Tankentlüftungsventils senkrecht verlaufenden Querschnitt kreisförmig ausgebildet.

Im Inneren des Gehäuses 2 ist in dessen unterem Bereich ein Auftriebskörper in Form eines Schwimmers 24 angeordnet. Der Schwimmer 24 ist als hohlzylinderförmiger, nach unten offener Körper 28 ausgebildet. Die sich somit kreisringförmig ergebende Aufstandsfläche des Schwimmers 24 weist Ausnehmungen 26 auf, durch die in das Tankentlüftungsventil eintretender Tankinhalt in den Hohlraum des Schwimmers 24 gelangen kann. Der Außendurchmesser des hohlzylinderförmigen Körpers 28 ist kleiner als der Innendurchmesser des Gehäusehauptkörpers 12. In das Tankentlüftungsventil eintretender Tankinhalt kann somit zwischen dem Gehäusehauptkörper 12 und dem hohlzylinderförmigen Körper 28 in den inneren Hohlraum des Schwimmers 24 eindringen. Der hohlzylinderförmige Körper 28 des Schwimmers 24 kann dazu gegebenfalls zusätzliche Eintrittsöffnungen aufweisen. Zur Führung des Schwimmers 24 innerhalb des Gehäusehauptkörpers 12 sind an der Außenseite des hohlzylinderförmigen Körpers 28 Abstandeinrichtungen vorgesehen. Die Abstandeinrichtungen können beispielsweise aus, sich senkrecht zum Gehäusehauptkörper 12 erstreckenden Ansätzen 30 bestehen. In der Querschnittsmitte des Schwimmers 24, die vorzugsweise auf der Längsachse 22 der Tankentlüftungsventils angeordnet ist, erstreckt sich einerseits nach unten in den hohlzylinderförmigen Körper 28 hinein ein zapfenförmiges Ansatzstück 32, welches über bekannte Maßnahmen den Auftrieb des Schwimmers 24 regelt. Andererseits erstreckt sich vom Schwimmer 24 ein weiteres zapfenförmiges Ansatzstück 34 nach oben, weg vom hohlzylinderförmigen Körper 28. Das freie Ende des Ansatzstuckes 34 ist zu spater erläuterten Dichtungszwecken sich verjüngend ausgebildet.

Oberhalb des Schwimmers 24 ist ein bewegbares Verschlußelement in Form eines Stoßels 36 im Inneren des Tankentlüftungsventils angeordnet. Der Stößel 36 ist in Figur 2 in seiner Verschlußstellung gezeigt. Dazu ist unterhalb des Stößels 36 ein federndes Teil in Form einer Druckfeder 38 angeordnet. Die Druckfeder 38 stützt sich mit ihrem unteren freien Ende auf einem in das Innere des Gehäuses 2 ragenden Ansatz 40 ab. Der Ansatz 40 ist auf der Innenseite des oberen Teils des Gehäusehauptkörpers 12 einstückig mit diesem ausgebildet. Ein erster Teil des Ansatzes 40 erstreckt sich senkrecht zur Längsachse 22 vom Gehäusehauptkörper 12 weg und ist kreisförmig ausgebildet. Für den Umfang dieser kreisförmigen Fläche des Ansatzes 40 sind Öffnungen 42 ausgebildet, die nachfolgend noch näher erläutert werden. Von dem ringkreisförmigen Teil 44 weg erstreckt sich senkrecht nach oben ein hohlzylinderförmiges Ansatzstück 46, welches oben und unten offen ist. In dieses hohlzylinderförmige Ansatzstück 46 erstreckt sich das Ansatzstück 34 des Schwimmers. Solange sich der Schwimmer 24 in seiner untersten Lage gemäß Figur 2 befindet, ragt das freie Ende des Ansatzstückes 34 zwar in das hohlzylinderförmige Ansatzstück 46 hinein, es steht jedoch nicht über dem oberen Abschluß des hohlzylinderförmigen Ansatzstückes 46 hervor. Das freie Ende des hohlzylinderförmigen Ansatzstückes 34 dient als Auflager für den Stößel 36, wenn dieser von der Verschlußstellung in die Öffnungsstellung bewegt wird. Dadurch wird die Öffnungsbewegung des Stößels 36 begrenzt. Der obere Abschluß des hohlzylinderförmigen Ansatzstückes 46 weist umkreisförmig verteilte Ausnehmungen 48 auf, um die Ausbildung eines Gaspolsters bei auf dem hohlkreisförmigen Ansatzstückes 44 aufsitzendem Stößel 36 zu vermeiden. Die Ausbildung eines solchen Gaspolsters könnte die Aufwärtsbewewgung des Schwimmers 24 behindern. Zu sicheren Anlage des oberen freien Endes der Druckfeder 38 ist das untere freie Ende des Stößels 36 mit einem nach unten ragenden Kranz 50 versehen, der einen Hohlraum beläßt, in welchen das obere freie Ende der Druckfeder 38 lagegesichert eingreifen kann.

Der Stößel 36 ist in seiner Bewegung nach oben, bedingt durch die Druckfeder 38, begrenzt. Dazu ist an der Innenseite des Gehäuseabschlußkörpers 18 eine, sich senkrecht zur Längsachse 22 erstreckende Anschlagfläche 52 ausgebildet, die mittig eine kreisrunde Ausnehmung freiläßt, durch die der Stößel 36 nach oben hin durchragen kann. Die Anschlagfläche 52 ist in der Draufsicht als ringkreisförmige Fläche ausgebildet. Der Bereich der Anschlagfläche 52, der sich zu deren Ausnehmung erstreckt, ist nach oben hin schräg verlaufend geformt. Im Anschlagbereich zwischen dem Stößel 36 und der Anschlagfläche 52 ist ein Dichtkörper in Form eines O-Rings 54 am Stößel 36 angeordnet. In Verschlußstellung des Stößels 36 liegt der O-Ring 54 dichtend an dem schräg nach oben verlaufenden Bereich der Anschlagfläche 52 an. Die von der Druckfeder 38 auf den Stößel 36 ausgeübte Kraft sorgt für einen flüssigkeits- und gasdichten Abschluß zwischen dem Stößel 36 und der Anschlagfläche 52, so daß sich im Ventilkörper befindliches Gas oder Flüssigkeit nicht zum Stutzen 4 gelangen kann.

Im Inneren des Stößels 36 ist vorzugsweise mittig ein Durchgangskanal 56 ausgebildet. Die Eintrittsöffnung 58 des Durchgangskanals 56 ist dem freien Ende des Ansatzstückes 34 des Schwimmers 24 gegenüberliegend angeordnet. Bei einer Aufwärtsbewegung des Schwimmers 24 kann deshalb die Spitze des Ansatzstückes 34 zur Anlage mit der Eintrittsöffnung 58 des Durchgangskanals 56 kommen. Das freie Ende der Eintrittsöffnung 58, ist sich trichterförmig erweiternd ausgebildet. Die trichterförmige Erweiterung verläuft, im Querschnitt gesehen, etwa unter einem Winkel von 45°. Entsprechend ist die Spitze des Ansatzstückes 34 unter 45° verlaufend sich verjüngend ausgebildet. Die Spitze des Ansatzstückes 34 ist im Durchmesser kleiner als der Durchmesser des Durchgangskanals 56, so daß diese bei Anlage des Schwimmers 24 am Stößel 36 ein Stück in den Durchgangskanal 56 eindringt und den Durchgangskanal flussigkeits- sowie gasdicht abschließt.

Am oberen Ende des Stößels 36 ist eine Membran 60 gasdicht angeordnet. Die Membran 60 ist mit ihren freien Enden am oberen Abschluß des Gehäuseabschlußkörpers 18 festgelegt und, entsprechend der Querschnittskonfiguration des Gehäusehauptkörpers 12, kreisförmig ausgebildet. Die zweckmäßige Anlagestelle den Membran 60 am Gehausehauptkörper 12 ist dort wo der Deckel 20 in den Gehäusehauptkörper 12 eingreift. Um eine gasdichte Anlage der Membran 60 an der Anschlußstelle zwischen dem Gehäusehauptkörper 12 und dem Deckel 20 zu erreichen, sind die freien Enden der Membran 60 wulstartig ausgebildet und greifen in entsprechender Ausnehmungen des Gehäusehauptkörpers bzw. Deckels 20 ein. Der oberhalb des Stößels 36 liegende Raum wird somit vom oberen Abschluß des Stößels 36, der durch die Membran 60 hindurchgreift, der Membran 60 und dem Deckel 20 gebildet. Die Unterseite der Membran 60 wird durch einen, an deren Unterseite am Stößel 36 angeordneten Clipsring 62 abgestützt. Der direkt unterhalb der Membran 60 angeordnete Clipsring erstreckt sich über einen wesentlichen Teil der Membran 60, wobei er jedoch einen Teil der Membran 60 freiläßt. In diesem Bereich, der sich vom freien Ende des Clipsrings 62 zum Anschluß der Membran 60 am Gehäuseabschlußkörper 18 erstreckt, ist nicht straff, sondern nach unten, eine Art ringkreisförmige Sicke bildet, ausgeformt. Durch diese Konfiguration der Membran 60 kann sich diese, zusammen mit dem Stößel 36, nach unten zum Schwimmer 24 hin bewegen.

Schließlich ist am Durchgangskanal 56 eine Öffnung in Form eines Kanals 64 angeordnet, die neben der Anlagestelle des Stößels 36 an der Anschlagfläche 52 eine weitere Verbindung von dem Bereich des Tankentlüftungsventils, in welchem der Schwimmer 24 angeordnet ist, hin zum Stutzen 4 darstellt. Der Kanal 64 ist vorzugsweise zum Stutzen 4 hin weisend ausgebildet, wobei dessen Durchmesser wesentlich geringer ist als der des Durchgangskanals 56. Der Kanal 64 ist im Bereich unterhalb der Membran 60 und oberhalb des O-Rings 54 angeordnet.

Anschließend wird die Funktionsweise des Tankentlüftungsventils anhand der Figuren 1 und 2 erläutert.

Die grundsätzliche Aufgabe des Tankentlüftungsventils besteht in der Abführung von Gasen aus dem Tank, die dann gewünscht ist, wenn sich im Leerraum des Tankes ein bestimmter Überdruck einstellt. Insbesondere durch die Federkraft der Druckfeder 38 sowie der auf dem Clipsring 62 aufliegenden Fläche der Membran 60 kann der Überdruck vorbestimmt werden, bei welchem eine Entlüftung des Tankes stattfinden soll. Der im Leerraum des Tank herrschende Überdruck kann durch die im Gehäuse 2 ausgebildeten Öffnungen, also durch die länglichen Ausnehmungen 6, die Öffnungen 8 sowie die zusätzliche Öffnung 10 in das Innere des Tankentlüftungsventils eindringen. Der Überdruck steht im Gehäusehauptkörper 12 bzw. dem Schwimmergehäuse, im Durchgangskanal 56 sowie in dem, im wesentlichen durch die Membran 60 und den Deckel 20 gebildeten, oberhalb des Stößels 36 gelegenen Raume an. Der Überdruck ergibt eine, auf den Stößel 36 nach unten zum Schwimmer 24 hin gerichtete Kraftkomponente. Der Clipsring 62 unterstützt dabei in vorteilhafter Weise die Einleitung des auf der Oberseite der Membran 60 anstehenden Drucks in den Stößel 36. In umgekehrter Richtung, d.h. nach oben zur Membran 60 hin, wirkt die Federkraft aus der Druckfeder 38, die den Stößel 36 so lange in seiner Verschlußstellung hält, bis die Resultierende aus dem Überdruck auf den Stößel 36 größer ist als die Federkraft der Druckfeder 58. In diesem Moment bewegt sich der Stößel nach unten und gibt einen Durchgang zum Stutzen 4 frei, indem der Stößel 36 den an ihm angeordneten O-Ring 54 mit nach unten zieht. Der im Tankentlüftungsventil befindliche Überdruck kann dann an der Außenseite des Stößels 36 zwischen O-Ring 54 und der Anschlagfläche 52 vorbeiströmen. Durch entsprechende Konfiguration im Bereich des O-Rings 54 kann ein sehr hoher Durchfluß erreicht werden, so daß der Überdruck in einer relativ kurzen Zeitspanne abgebaut werden kann. Mit der gezeigten besonderen Ausführungsform des Tankentlüftungsventiles kann beispielsweise ein Durchfluß von 10.000 Litern pro Stunde bei einem Druck von 100 mbar erreicht werden. Sobald der anstehende Gasdruck bzw. Überdruck unter den vorbestimmbaren Gasdruck gefallen ist, übersteigt die Federkraft aus der Druckfeder 58 die nach unten auf den Stößel 36 wirkende Resultierende, so daß der Stößel 36 wieder in die Verschlußstellung zurückgeführt wird.

Ersichtlicherweise ist durch den Kanal 64 ein permanentes Entlüften, eine sogenannte Vorentlüfung, gegeben. Prinzipiell kann jedoch auf die Vorentlüftung auch verzichtet werden. In der Verschlußstellung des Stößels 36 ist der Leerraum des Tankes zum Stutzen 4 hin vollkommen abgedichtet.

Bei Tankentlüftungsventilen kann aber das Erfordernis bestehen, in jeder erdenklichen Situation zu verhindern, daß der Tankinhalt, also beispielsweise Benzin o.ä., zum Auslaßstutzen 4 gelangt. Zwar ist das Tankentlüftungsventil im Leerraum des Tankes angeordnet. Bei einer Schräglage des Tankes kann jedoch in das Innere des Tankentlüftungsventiles Benzin gelangen. Befindet sich in diesem Moment der Stößel 36 in der Öffnungsstellung, besteht die Gefahr, daß das Benzin zum Stutzen 4 hin gelangt, also zwischen O-Ring 54 und Anschlagfläche 52 hindurchströmt. Dies zu vermeiden ist Aufgabe des Schwimmers 24. Der Schwimmer 24 muß beim Eindringen von Benzin in das Innere des Tankentlüftungsventiles einer solchen Auftrieb erfahren, daß das freie Ende seines Ansatzstückes 34 dichtend gegen die Eintrittsöffnung 58 des Durchgangskanals 56 bewegt wird. Der an dieser Stelle anstehende Schwimmer 24 unterstützt die Federkraft der Druckfeder 38 und kann dadurch den Stößel 36 auch für den Fall in seine Verschlußstellung bewegen, wenn der vorbestimmbare Überdruck eigentlich ein Bewegen des Stößels 36 in die Öffnungsstellung zur Folge hätte. Die dichtende Anlage des freien Endes des Ansatzstückes 34 des Schwimmers 24 an der Eintrittsöffnung 58 des Durchgangskanals 56 dient zur Verhinderung des Eindringens von Benzin in den Durchgangskanal 56. Unabhängig davon, ob sich der Stößel 36 in seiner Verschlußstellung oder seiner Öffnungsstelle befindet, verhindert das freie Ende des Ansatzstückes 34 durch seine dichtende Anlage das Eindringen von Benzin in den Durchgangskanal 56 des Stößels 36. Somit wird verhindert, daß Benzin in den Durchgangskanal 56 eindringt, und durch den Kanal 64 zum Stutzen 4 gelangt.

Die eigentliche Aufgabe des Kanals 64 besteht in einer Entlüftung des Durchgangskanal 56 und des oberhalb des Stößels 36 liegenden Raumes, d.h. zum Abbau eines eventuell dort herrschenden Überdrucks. Wird der Schwimmer 24 durch eindringendes Benzin nach oben aufgetrieben und befindet sich in diesem Moment der stößel 36 in der Öffnungsstellung, da der vorbestimmbare Überdruck überschritten worden ist, kann durch die dichte Anlage des Ansatzstückes 34 an der Eintrittsöffnung 58 der im Durchgangskanal 56 und dem über dem Stößel 36 befindlichen Raum Überdruck erhalten bleiben. Die Resultierende aus diesem Überdruck könnte eine Größe erreichen, die noch immer größer ist als die Federkraft aus der Druckfeder 38 zusammen mit der ebenfalls auf den Stößel 36 wirkenden Resultierenden aus dem Auftrieb des Schwimmers 24. Bei diesen Verhältnissen könnte dann der Stößel 36 nicht mehr in seiner Verschlußstellung rückgeführt werden, wodurch der Austritt von im Tankentlüftungsventil befindlichem Benzin zum Stutzen 4 hin ermöglicht wäre. Um auch für diesen erdenklichen Fall einen Austritt von Benzin zum Stutzen 4 hin zu vermeiden, ist der Kanal 64 vorgesehen. Durch den Kanal 64 wird der im Durchgangskanal 56 sowie der im oberhalb des Stößels 36 angeordneten Raum befindliche Überdruck abgebaut, so daß innerhalb einer vorbestimmbaren Zeitspanne die aus dem Überdruck auf den Stoßel 36 nach unten wirkende Resultierende eine Größe erreicht, bei der die Druckfeder 38 zusammen mit dem Schwimmer 24 den Stößel 36 in die Verschlußstellung zurückführt.

Aufgabe der länglichen Ausnehmungen 6 ist es, durch entsprechende Größe ein rasches Eindringen von großen Mengen Benzins in das Innere des Tankentlüftungsventiles zu gewährleisten, um in einer schnellstmöglichen Zeitspanne für den Auftrieb des Schwimmers 24 zu sorgen. Falls Benzin an das Tankentlüftungsventil gelangt, wird dies in großen Mengen durch die länglichen Ausnehmungen 6 eindringen, bevor beispielsweise Benzin auch durch die Öffnungen 8 in das Innere des Tankentlüftungsventils eindringt, was aber prinzipiell möglich ist. Die Öffnungen 8 dienen in erster Linie zum Einlaß des im Leerraum des Tanks vorherrschenden Gasdruck bzw. Überdrucks in das Innere des Tankentlüftungsventils, wenngleich durch die länglichen Ausnehmungen 6 ebenfalls Gasdruck in das Innere des Tankentlüftungsventils gelangt. Zwar kann auch durch die zusätzlichen Öffnungen 10 Benzin einerseits und Gasdruck andererseits in das Innere des Tankentlüftungsventils gelangen. Die eigentliche Aufgabe der zusätzlichen Öffnungen 10 besteht aber darin, ein sich eventuell im Bereich zwischen der Spitze des Ansatzstückes 34 des Schwimmers 24 und dem Stößel 36 ausbildendes Gaspolster in den Leerraum des Tankes abzuführen. Könnte ein solches, sich möglicherweise in diesem Bereich bildendes Gaspolster nicht oder nur nach einiger Zeit abgebaut werden, könnte der Schwimmer 24 an seinem Auftrieb gehindert oder zumindest im Auftrieb behindert werden, so daß eine angestrebte schnelle dichtende Anlage am Durchgangskanal 56 des Stößels 36 verhindert bzw. behindert werden könnte. Da dies nicht gewünscht ist, sind die zusätzlichen Öffnungen 10 vorgesehen, die für diesen Fall zweckmäßigerweise in der Nähe des Bereichs angeordnet sind, in welchem die Gefahr der Ausbildung eines Gaspolsters besteht.

Aufgabe der am ringkreisförmigen Ansatzstück 44 des Ansatzes 40 ausgebildeten Öffnungen 42 ist es, ein Vorbeiströmen von Gas im geöffneten Zustand des Stößels 36 in unmittelbarer Nähe des freien Endes des Ansatzstückes 34 des Schwimmers 24 zu verhindern. Bei einem Vorbeiströmen von Gas an diesem Bereich des Schwimmers 24 könnten sich Druckverhältnisse einstellen, die ein ungewolltes Anheben des Schwimmers 24 auch für den Fall verursachen, indem im Inneren des Tankentlüftungsventils kein, dem Schwimmer 24 Auftrieb verleihendes Medium vorhanden ist. Wird in diesem Fall der Schwimmer 24 aber angehoben, verschließt er den Durchgangskanal 56. In diesem Fall würde, wie bereits erläutert, auf Grund des Kanals 64 der Überdruck abgebaut werden, der den Stößel 36 zunächst in seine Öffnungsstellung bewegt hat. In der Folge würde der Stößel 36 in die Verschlußstellung zurückgeführt, obwohl der im Leerraum des Tankes herrschende Gasdruck bzw. Überdruck durch Bewegung des Stößels 36 in die Öffnungsstellung abgebaut werden sollte bzw. müßte. Dies ist aber nicht gewünscht. Die Öffnungen 42 sorgen nun dafür, daß der Gasstrom an dem Ansatzstück 34 vorbeigeführt wird. Anstelle auf der dem Ansatzstück 34 zugewandten Innenseite des hohlzylinderförmigen Ansatzstückes 46 vorbeiströmen zu müssen, kann der Gastrom durch die Öffnungen 42 hindurch direkt zum O-Ring 54 bzw. der Anschlagfläche 52 geführt werden, um letztlich zum Stutzen 4 hin zu gelangen. Die Außenseite des hohlzylinderförmigen Ansatzstückes 46 schützt dabei zusätzlich das Ansatzstück 34 vor dem eintretenden Gasstrom und somit den ungünstigen Druckverhältnissen.

Die Ausnehmungen 48 des hohlzylinderförmigen Ansatzstückes 46 sollen bei aufliegendem Stößel 36, d.h. in der maximalen Öffnungsstellung des Stößels 36, dafür sorgen, daß der anstehende Gasdruck bzw. Überdruck ungehindert in den Durchgangskanal 56 und somit den oberhalb des Stößels 36 angeordneten Raum gelangen kann. Bei auf dem freien Ende des hohlzylinderförmigen Ansatzstückes 46 aufliegendem Stößel 36 soll demnach eine Abdichtung des Durchgangskanals 56 vermieden werden, wenngleich daneben zwischen dem Ansatzstück 34 des Schwimmers 24 und dem hohlzylinderförmigen Ansatzstück 46 noch Gasdruck bzw. Überdruck in den Durchgangskanal 56 gelangen kann.

## Patentansprüche

1. Tankentlüftungsventil zur Abführung von sich in einem Tank ansammelnden Gasen mit einem Gehäuse (2), welches wenigstens einen Einlaß (6, 8, 10) und wenigstens einen Auslaß (4) für das Gas aufweist, wobei die Verbindung zwischen Einlaß (6, 8, 10) und Auslaß (4) durch ein, bis zu einem vorbestimmbaren Gasdruck in Verschlußstellung gehaltenes, bewegbares Verschlußelement (36) unterbrochen ist, welches zum Öffnen entgegen der Strömungsrichtung des Gases bewegbar ist, wobei das Innere des Verschlußelementes (36) einen Durchgangskanal (56) aufweist, dessen Austrittsöffnung in einen Raum führt, der nach außen sowie zur Innenseite des Gehäuses hin abgedichtet ist und die innenseitige Abdichtung aus einem, vorzugsweise einerseits am Verschlußelement (36) und vorzugsweise andererseits an der Innenseite des Gehäuses (2) angeordneten elastischen Element, insbesondere in Form einer Membran (60) besteht, wobei der Durchgangskanal (56) des Verschlußelementes (36) durch einen Schwimmer (24) verschließbar ist,
dadurch gekennzeichnet, daß
eine Leiteinrichtung (44, 46, 48) in dem Gehäuse (2) vorgesehen ist, die den Gasstrom am Schwimmer (24) vorbeilenkt, um den Schwimmer (24) vom Gasstrom weitgehend freizuhalten.

2. Tankentlüftungsventil nach Anspruch 1, bei welchem der Auslaß (4) außerhalb des Tanks und der Einlaß (6, 8, 10) innerhalb des Tanks angeordnet ist.

3. Tankentlüftungsventil nach Anspruch 1 oder 2, bei welchem der Auslaß (4) mit einer Einrichtung verbunden ist, die ein Austreten von ungefiltertem Gas in die Atmosphäre verhindert.

4. Tankentlüftungsventil nach Anspruch 3, bei welchem die Einrichtung aus einem Filter für das Gas und/oder einer Rückführeinrichtung zu den Verbrennungsräumen einer Brennstoffmaschine besteht.

5. Tankentlüftungsventil nach einem der Ansprüche 1 bis 4, bei welchem das Verschlußelement (36) über ein elastisches, vorzugsweise federndes Teil (38) in seiner Verschlußstellung gehalten ist.

6. Tankentlüftungsventil nach Anspruch 5, bei welchem das elastische Teil aus einer, in Strömungsrichtung des Gases gesehen, unterhalb des Verschlußelementes (36) angeordneten Druckfeder (38) besteht.

7. Tankentlüftungsventil nach einem der Ansprüche 5 oder 6, bei welchem der Gasdruck mittelbar oder unmittelbar auf das Verschlußelement (36) wirkt, um bei dem vorbestimmbaren Gasdruck das Verschlußelement (36) gegen die Kraft des elastischen Teils (38) in eine Öffnungsstellung zu bewegen.

8. Tankentlüftungsventil nach einem der Ansprüche 1 bis 7, bei welchem das Gas in der Öffnungsstellung des Verschlußelements (36) an dessen Außenseite vorbeiströmt.

9. Tankentlüftungsventil nach Anspruch 1, bei welchem die Eintrittsöffnung (58) des Durchgangskanals (56) des Verschlußelementes (36) verschließbar ist.

10. Tankentlüftungsventil nach einem der Ansprüche 1 oder 9, bei welchem das Verschließen der Eintrittsöffnung (58) über die Anlage des im Gehäuse (2) angeordneten Schwimmers (24) erfolgt.

11. Tankentlüftungsventil nach einem der Ansprüche 1 bis 10, bei welchem eine weitere Verbindung (64) vorgesehen ist, die ein permanentes Entlüften des Tanks zum Auslaß (4) hin ermöglicht.

12. Tankentlüftungsventil nach Anspruch 11 bei welchem, in Strömungsrichtung des Gases gesehen, die weitere Verbindung (64) hinter der Verschlußstelle der Eintrittsöffnung (58) angeordnet ist.

13. Tankentlüftungsventil nach einem der Ansprüche 11 oder 12 bei welchem die weitere Verbindung (64) am Durchlaßkanal (56) des Verschlußelements (36) angeordnet ist.

14. Tankentlüftungsventil nach einem der Ansprüche 1 bis 13, bei welchem in der Nähe der Verschlußstelle zwischen dem Verschlußelement (36) und dem Schwimmer (24) wenigstens eine zusätzliche Öffnung (10) in dem Gehäuse (2) angeordnet ist, die mit dem Tankinneren in Verbindung steht.

## Claims

1. Tank-venting valve for discharging gases accumulating in a tank, having a housing (2) which has at least one inlet (6, 8, 10) and at least one outlet (4) for the gas, the connection between inlet (6, 8, 10) and outlet (4) being interrupted by a movable closure element (36) which is held in a _closed position up to a predeterminable gas pressure and can be moved counter to the flow direction of the gas for opening purposes, the interior of the closure element (36) having a through-passage duct (56) whose outlet opening leads into a chamber which is sealed towards the outside and towards the inside of the housing, and the inside sealing comprising an elastic element, in particular in the form of a diaphragm (60), which is arranged preferably, on the one hand, on the closure element (36) and preferably, on the other hand, on the inside of the housing (2), it being possible for the through-passage duct (56) of the closure element (36) to be closed by a float (24), characterized in that a directing device (44, 46, 48) is provided in the housing (2), which directing device deflects the gas stream past the float (24) in order to keep the float (24) largely free from the gas stream.

2. Tank-venting valve according to Claim 1, in the case of which the outlet (4) is arranged outside the tank and the inlet (6, 8, 10) is arranged within the tank.

3. Tank-venting valve according to Claim 1 or 2, in the case of which the outlet (4) is connected to a device which prevents unfiltered gas from passing out into the atmosphere.

4. Tank-venting valve according to Claim 3, in the case of which the device comprises a filter for the gas and/or a return device to the combustion chambers of an internal combustion engine.

5. Tank-venting valve according to one of Claims 1 to 4, in the case of which the closure element (36) is held in its closed position via an elastic, preferably resilient part (38).

6. Tank-venting valve according to Claim 5, in the case of which the elastic part comprises a compression spring (38) which is arranged beneath the closure element (36), as seen in the flow direction of the gas.

7. Tank-venting valve according to one of Claims 5 or 6, in the case of which the gas pressure acts directly or indirectly on the closure element (36) in order, at the predeterminable gas pressure, to move the closure element (36) into an open position counter to the force of the elastic part (38).

8. Tank-venting valve according to one of Claims 1 to 7, in the case of which, in the open position of the closure element (36), the gas flows past the outside of the said closure element.

9. Tank-venting valve according to Claim 1, in the case of which the inlet opening (58) of the through-passage duct (56) of the closure element (36) can be closed.

10. Tank-venting valve according to one of Claims 1 to 9, in the case of which the inlet opening (58) is closed by virtue of the float (24), arranged in the housing (2), butting against it.

11. Tank-venting valve according to one of Claims 1 to 10, in the case of which a further connection (64) is provided, which further connection permits permanent venting of the tank towards the outlet (4).

12. Tank-venting valve according to Claim 11, in the case of which the further connection (64) is arranged downstream of the closure location of the inlet opening (58), as seen in the flow direction of the gas.

13. Tank-venting valve according to one of Claims 11 or 12, in the case of which the further connection (64) is arranged on the through-passage duct (56) of the closure element (36).

14. Tank-venting valve according to one of Claims 1 to 13, in the case of which at least one additional opening (10) is arranged in the housing (2), in the vicinity of the closure location between the closure element (36) and the float (24), said opening being in connection with the interior of the tank.

## Revendications

1. Soupape de purge pour réservoir, pour l'évacuation de gaz s'accumulant dans un réservoir, comprenant un boîtier (2) qui comporte au moins une admission (6, 8, 10) et au moins un échappement (4) pour le gaz, la liaison entre l'admission (6, 8, 10) et l'échappement (4) étant interrompue par un élément de fermeture mobile (36), maintenu en position de fermeture jusqu'à une pression de gaz prédéterminable, lequel élément de fermeture est mobile vers l'ouverture à l'encontre du sens d'écoulement du gaz, l'intérieur de l'élément de fermeture (36) comportant un canal de passage (56), dont l'orifice de sortie conduit dans un espace qui est fermé vers l'extérieur ainsi que vers l'intérieur du boîtier et l'étanchéité du côté intérieur se compose d'un élément élastique, en particulier sous forme d'une membrane (60), fixé de préférence d'une part sur l'élément de fermeture (36) et de préférence d'autre part sur la face interne du boîtier (2), le canal de passage (56) de l'élément de fermeture (36) pouvant être obturé par un flotteur (24),
caractérisée par le fait qu'un dispositif de guidage (44, 46, 48) est prévu dans le boîtier (2), lequel dispositif dirige le courant de gaz à côté du flotteur (24), pour dégager largement le flotteur (24) du courant de gaz.

2. Soupape de purge pour réservoir selon la revendication 1, dans laquelle l'échappement (4) est disposé à l'extérieur du réservoir et l'admission (6, 8, 10) est disposée à l'intérieur du réservoir.

3. Soupape de purge pour réservoir selon la revendication 1 ou 2, dans laquelle l'échappement (4) est relié à un dispositif qui empêche une sortie de gaz non filtré dans l'atmosphère.

4. Soupape de purge pour réservoir selon la revendication 3, dans laquelle le dispositif se compose d'un filtre pour le gaz et/ou d'un dispositif de recyclage vers les chambres de combustion d'une machine thermique.

5. Soupape de purge pour réservoir selon l'une des revendications 1 à 4, dans laquelle l'élément de fermeture (36) est maintenu dans sa position de fermeture par une pièce (38) élastique, de préférence formant ressort.

6. Soupape de purge pour réservoir selon la revendication 5, dans laquelle la pièce élastique se compose d'un ressort de pression (38) disposé au-dessous de l'élément de fermeture (36), vu dans le sens d'écoulement du gaz.

7. Soupape de purge pour réservoir selon l'une des revendications 5 ou 6, dans laquelle la pression de gaz agit directement ou indirectement sur l'élément de fermeture (36) pour déplacer cet élément de fermeture 36 à l'encontre de la force de la pièce élastique (38) pour la pression de gaz prédéterminable.

8. Soupape de purge pour réservoir selon l'une des revendications 1 à 7, dans laquelle le gaz s'écoule, en position d'ouverture de l'élément de fermeture (36), contre la face externe de celui-ci.

9. Soupape de purge pour réservoir selon la revendication 1 dans laquelle l'orifice d'entrée (58) du canal de passage (56) de l'élément de fermeture (36) peut être obturé.

10. Soupape de purge pour réservoir selon l'une des revendications 1 ou 9, dans laquelle la fermeture de l'orifice d'entrée (58) résulte de la venue en appui du flotteur (24) disposé dans le boîtier (2).

11. Soupape de purge pour réservoir selon l'une des revendications 1 à 10, dans laquelle une autre liaison (64) est prévue, qui rend possible une ventilation permanente du réservoir vers l'échappement (4).

12. Soupape de purge pour réservoir selon la revendication 11, dans laquelle l'autre liaison (64) est disposée derrière l'emplacement de fermeture de l'orifice d'entrée (58), vue dans le sens d'écoulement du gaz.

13. Soupape de purge pour réservoir selon l'une des revendications 11 ou 12, dans laquelle l'autre liaison (64) est disposée sur le canal de passage (56) de l'élément de fermeture (36).

14. Soupape de purge pour réservoir selon l'une des revendications 1 à 13, dans laquelle au moins un orifice supplémentaire (10) est disposé dans le boîtier (2) au voisinage de l'emplacement de fermeture entre l'élément de fermeture (36) et le flotteur (24), lequel orifice se trouve en liaison avec l'intérieur du réservoir.
